# EUROPÄISCHE PATENTANMELDUNG

(11) **EP 1 060 671 A2**
(43) Veröffentlichungstag der Anmeldung: **20.12.2000**
(21) Anmeldenummer: 00103202.8
(22) Anmeldetag: 17.02.2000
(51) Int. Cl.: A23C 13/16, A23C 9/15, A23D 7/00

(54) **Streicherzeugnis auf Basis von Sauerrahm und Verfahren zu seiner Herstellung**

(30) Priorität: 16.06.1999 DE 19927444
(71) Anmelder: Dr. AUGUST OETKER NAHRUNGSMITTEL KG, 33617 Bielefeld (DE)
(72) Erfinder: Holt, Johannes, 31600 Vechta (DE); Voss, Hans-Dieter, 33609 Bielefeld (DE)
(74) Vertreter: Meyer, Gerd

(57) **Zusammenfassung**

Die vorliegende Erfindung betrifft ein Streicherzeugnis, welches dadurch gekennzeichnet ist, daß als Basis Creme fraiche/Sauerrahm verwendet wird, der Butter und/oder andere pflanzliche und/oder tierische Fette zugegeben wurden, wobei Zutaten wie Magermilch, fermentierte Sauermilch, färbende und stabilisierende Zutaten zugemischt werden, so daß der Brotaufstrich einen Fettgehalt von 20 - 38 %, eine Trockenmasse von 26 - 44 % und einen pH-Wert von 4,2 - 4,9 aufweist.

## Beschreibung

Butter, Margarine und sonstige Brotaufstrichen erfreuen sich großer Beliebtheit.

Die Hauptverwendung dieser bewährten Produkte liegt in der kalten und warmen Küche zur Verfeinerung von Brot, Saucen, Gerichten und zum Backen.

Butter, Margarine und sonstige Brotaufstriche haben als Basis Fett, so daß der Fettgehalt relativ hoch ist und enthalten demzufolge nur wenig an emährungsphysiologisch wichtigen Stoffen. Geschmacklich gibt es auch kaum Unterschiede innerhalb der einzelnen Erzeugnisse und auch nicht zwischen den Produktsorten.

Aufgabe der vorliegenden Erfindung ist es, einen fettreduzierten Brotaufstrich auf Sauerrahmbasis zu entwickeln, der in seinen sensorischen Merkmalen der Butter sehr nahekommt und diese anwendungstechnisch in fast allen Bereichen ersetzt.

Die Lösung der vorstehenden Aufgabe geschieht durch die kennzeichenden Merkmale des Anspruchs 1. Weitere Lösungsformen sind in den Unteransprüchen enthalten.

Zum Stand der Technik gehörend sind die deutschen Offenlegungsschriften 3 043 656 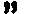 Flüssigaufstrich mit geringem Fettgehalt und Verfahren zu dessen Herstellung" und 3 043 655 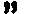 Aufstrichmasse mit geringem Fettgehalt und Verfahren zur Herstellung dieser Austrichmasse" anzusehen.

Im Gegensatz zu den vorstehend genannten Offenlegungsschriften, in denen Produkt- und Hersteilverfahren beschrieben werden, bei denen pflanzliche und tierische Fette, Emulgatoren, Wasser und Bindemittel eingesetzt werden, wird im vorliegenden Fall eine Problemlösung vorgeschlagen, die von Creme fraiche ausgeht, der keine klassischen Emulgatoren zugesetzt worden sind. Vorzugsweise soll ein niedrigerer pH-Wert als üblich im Endprodukt erreicht werden (pH 4,2 - 4,9).

Hergestellt wird der erfindungsgemäße Brotaufstrich aus Creme fraiche bzw. Sauerrahm, dem geschmolzene Butter, pflanzliche Fette wie Kokosfett oder tierische Fette, eventuell Milch u.a., fermentierte Sauermilch, färbende und stabilisierende Zutaten beigemischt werden.

Überraschenderweise wurde festgestellt, daß bei einer speziellen Homogenisierung des Gemischs bei einem Druck von 100 - 200 bar bei einer Temperatur von 30 - 80 °C sowie anschließender Abfüllung und Kühlung bis 30 °C eine besonders gute Konsistenz von fest bis cremig erzielt wird. Im Gegensatz zu Butter ist die erfindungsgemäße Creme aus dem Kühlschrank entnommen, auch bei 5 °C streichfähig. Die Creme enthält im Vergleich zu Butter sehr viel weniger Fett und hat insgesamt eine günstigere ernährungsphysiologische Zusammensetzung (mehr Aminosäuren, mehr Mineralstoffe, mehr Vitamine usw.). Die Kombination Creme fraiche/Butter u.a. pflanzliche Fette und andere tierische Fette sowie Buttermilch, fermentierte Sauermilch, Molke, rekonstituierte Milch ist die Geschmacksempfindung im Vergleich zu Butter/Margarine und ähnlichen Produkten wesentlich intensiver, frischer, mild/säuerlicher mit einer deutlichen Butternote. In der Anwendung kann sie in fast allen Bereichen die Butter ersetzen, so zum Beispiel als Soßenverfeinerer beim Backen, als Brotaufstrich usw. und zeichnet sich dabei durch die neu kreierte Geschmacksnote aus.

### Rezepturbeispiel 1

### Natur

| | | |
|---|---|---|
| Creme fraiche | 72 % | 66 % |
| Butter | 2 % | 10 % |
| Sahne | 14,5 % | 10,5 % |
| Magermilch | 10,0 % | 12,0 % |
| Verdickungs-/Geliermittel Gelatine, Guarkernmehl | 1,0 % | 0,8 % |
| Satz | 0,4 % | 0,6 % |
| Antioydantie Toocopherol | 0,002 % | 0,002 % |
| Farbstoff β- Carotin | 0,048 % | 0,068 % |
| Konservierungsstoff Sorbinsäure | 0,05 % | 0,03 % |
| | 100 % | 100 % |

### Rezepturbeispiel 2

### Kräuter

| | | |
|---|---|---|
| Creme fraiche | 53 % | 65 % |
| fermentierte Sauermilch | 34 % | 25,4 % |
| Kokosfett | 12,545 % | 8,0 % |
| Verdickungs-/Geliermittel Gelatine, Guarkernmehl | 0,085 % | 0,8 % |
| Salz | 0,339 % | 0,685 % |
| Antioydantie Toocopherol | 0,002 % | 0,002 % |
| Farbstoff β- Carotin | 0,024 % | 0,068 % |
| Konservierungsstoff Sorbinsäure | 0,005 % | 0,045 % |
| | 100 % | 100 % |
| Gartenkräuterzubereitung (zusätzliche Zutat) | 5,0 % | 10,0 % |

### Rezepturbeispiel 3

### Schnittlauch

| | | |
|---|---|---|
| Creme fraiche | 53 % | 65 % |
| Buttermilch oder Molke | 34 % | 25,4 % |
| tierische Fette | 12,545 % | 8,0 % |
| Verdickungs-/Geliermittel Gelatine, Guarkernmehl | 0,085 % | 0,8 % |
| Salz | 0,339 % | 0,685 % |
| Antioydantie Toocopherol | 0,002 % | 0,002 % |
| Farbstoff β- Carotin | 0,024 % | 0,068 % |
| Konservierungsstoff Sorbinsäure | 0,005 % | 0,045 % |
| | 100 % | 100 % |
| **on top** (zusätzliche Zutat) Schnittlauchzubereitung (Schnittlauch,Zwiebeln, Wasser, Salz, Zucker, Würz- undAromastoffe, Bindemittel) | 5,0 % | 10,0 % |

### Rezepturbeispiel 4

### Zwiebel/Knoblauch

| | | |
|---|---|---|
| Creme fraiche | 53 % | 65 % |
| rekonstituierte Milch | 34 % | 25,4 % |
| Kokosfett | 12,545 % | 8,0 % |
| Verdickungs-/Geliermittel Gelatine, Guarkernmehl | 0,085 % | 0,8 % |
| Salz | 0,339 % | 0,685 % |
| Antioydantie Toocopherol | 0,002 % | 0,002 % |
| Farbstoff β- Carotin | 0,024 % | 0,068 % |
| Konservierungsstoff Sorbinsäure | 0,005 % | 0,045 % |
| | 100% | 100 % |
| Zwiebel-/Knoblauch-zubereitung (zusätzliche Zutat) | 5,0 % | 10,0 % |

### Produktbeschreibung:

- **Aussehen:**: buttertypisch, glatt, Kräuter und Zwiebel/Knoblauch Varianten optisch erkennbar
- **Geschmack:**: buttrig, sahnig, mild/säuerlich, Varianten sortentypisch
- **Konsistenz:**: streichfähig, cremig, glatt synäresefrei
- **Viskosität:**: 700 - 1000 load/g, Penetrometer Stevens, Meßkörper Round End TA.23, Eintauchtiefe 10 mm, 1mm/sec, bei 10 °C gemessen
- **Fettgehalt:**: 20 bis 38 %, vorzugsweise 30 %
- **Trockenmasse:**: 26 bis 44 %, vorzugsweise 37 %
- **pH-Wert:**: ca. 4,2 bis 4,9, vorzugsweise 4,5
- **Keimzahl:**: Milchsäurebakterien, frei von Hefen und Schimmel

## Patentansprüche

1. Streicherzeugnis, dadurch gekennzeichnet, daß als Basis Creme fraiche/Sauerrahm verwendet wird, der Butter und/oder andere pflanzliche und/oder tierische Fette zugegeben wurden, wobei Zutaten wie Magermilch, fermentierte Sauermilch, färbende und stabilisierende Zutaten zugemischt werden, so daß der Brotaufstrich einen Fettgehalt von 20 - 38 %, eine Trockenmasse von 26 - 44 % und einen pH-Wert von 4,2 - 4,9 aufweist.

2. Streicherzeugnis nach Anspruch 1, dadurch gekennzeichnet, daß die verwendete Creme fraiche bzw. der verwendete Sauerrahm einen Fettgehalt von 20 - 38 %, einen pH-Wert von 4,5 bis 4,2, eine Gesamttrockenmasse von 26 - 43 % aufweist und mit mesophilen Milchsäurekulturen fermentiert wurde.

3. Streicherzeugnis nach Anspruch 1, dadurch gekennzeichnet, daß die verwendete Creme fraiche bzw. der verwendete Sauerrahm einen Fettgehalt von 20 - 38 %, einen pH-Wert von 4,5 bis 4,2, eine Gesamttrockenmasse von 26 - 43 % aufweist und mit thermophilen Milchsäurekulturen fermentiert wurde.

4. Streicherzeugnis nach den vorhergehenden Ansprüchen, dadurch gekennzeichnet, daß anstelle von Butter pflanzliche Fette verwendet werden.

5. Streicherzeugnis nach den vorhergehenden Ansprüchen, dadurch gekennzeichnet, daß anstelle von Butter tierische Fette verwendet werden.

6. Streicherzeugnis nach den vorhergehenden Ansprüchen, dadurch gekennzeichnet, daß anstelle von Butter Mischungen aus pflanzlichen und tierischen Fetten verwendet werden.

7. Streicherzeugnis Anspruch 1 und einem der vorhergehenden Ansprüche, dadurch gekennzeichnet, daß bei der Herstellung Milch und/oder rekonstituierte Milch und/oder Buttermilch und/oder Molke und/oder fermentierte Sauermilch und/oder eine wässrige Lösung enthaltend pflanzliche und/oder tierische Zutaten bei der Herstellung verwendet wird.

8. Streicherzeugnis nach Anspruch 1 und einem der vorhergehenden Ansprüche, dadurch gekennzeichnet, daß dem Gemisch zu einem vorgegebenen Zeitpunkt Farbstoffe wie β-Carotin, Antioxydantien wie Tocopherol, Geschmacks- und Zusatzstoffe sowie Geliermittel zugesetzt werden.

9. Streicherzeugnis nach Anspruch und einem der vorhergehenden Ansprüche, dadurch gekennzeichnet, daß dem Gemisch zu einem vorgegebenen Zeitpunkt Farbstoffe wie β-Carotin, Antioxydantien wie Tocopherol, Geschmacks- und Zusatzstoffe sowie Verdickungsmittel vorzugsweise Galaktomannane zugesetzt werden.

10. Verfahren zur Herstellung eines Streicherzeugnisses, dadurch gekennzeichnet, daß alle Zutaten gut vermischt werden und bei einem Druck von 100 - 250 bar bei 30 - 80 °C homogenisiert werden.

11. Verfahren zur Herstellung eines Streicherzeugnisses, dadurch gekennzeichnet, daß alle Zutaten gut vermischt werden und bei einem Druck von 200 bar bei 65 °C homogenisiert werden.

12. Verfahren nach einem der Ansprüche 10 und 11, dadurch gekennzeichnet, daß es sich bei der verwendeten Butter um eine Süßrahmbutter handelt.

13. Verfahren nach einem der Ansprüche 10 und 11, dadurch gekennzeichnet, daß es sich bei der verwendeten Butter um eine Sauerrahmbutter handelt.

14. Verfahren nach einem der Ansprüche 10 - 13, dadurch gekennzeichnet, daß die Butter oder die anderen Fette schonend in Milch, Creme fraiche/Sauerrahm, fermentierte Sauermilch eingearbeitet werden.

15. Verfahren nach der Ansprüche 10 und 11 sowie einem der weiteren Ansprüche, dadurch gekennzeichnet, daß das Endprodukt nach Abfüllung und Kühlung sich verfestigt und eine gute Streichfähigkeit bekommt, wobei die Viskosität im Bereich von cremig bis fest liegen sollte, d. h. innerhalb von Penetrationswerten von 700 - 1000 load/g (Penetrometer Stevens, Meßkörper Round End TA.23, Eintauchtiefe 10 mm, 1mm/sec)
